# EUROPÄISCHE PATENTSCHRIFT

(11) **EP 1 299 929 B1**
(45) Veröffentlichungstag und Bekanntmachung des Hinweises auf die Patenterteilung: **29.12.2010**
(21) Anmeldenummer: 01953835.4
(22) Anmeldetag: 02.07.2001
(51) Int. Cl.: H01R 39/58, H04B 5/00, H04B 17/00

(54) **SELBSTDIAGNOSTIZIERENDES ÜBERTRAGUNGSSYTEM**
SELF-DIAGNOSING TRANSMISSION SYSTEM
SYSTEME DE TRANSMISSION CAPABLE D'AUTODIAGNOSTIC

(30) Priorität: 30.06.2000 DE 10031005
(43) Veröffentlichungstag der Anmeldung: 09.04.2003
(73) Patentinhaber: Schleifring und Apparatebau GmbH, 82256 Fürstenfeldbruck (DE)
(72) Erfinder: LOHR, Georg, 82223 Eichenau (DE)
(74) Vertreter: Lohr, Georg
(86) Internationale Anmeldenummer: PCT/DE2001/002443
(87) Internationale Veröffentlichungsnummer: WO 2002/003403

(56) Entgegenhaltungen:
- EP-A- 0 920 092
- DE-A- 19 619 728
- US-A- 5 177 419
- US-A- 6 011 962

## Beschreibung

### Technisches Gebiet

Die Erfindung bezieht sich auf Anordnungen zur Übertragung von elektrischen Signalen, elektrischer Energie, Flüssigkeiten, Gasen und anderen Medien über kurze Distanzen zwischen gegeneinander beweglichen Einheiten.

Je nach Art der Bewegung werden diese unter verschiedenen Begriffen wie beispielsweise Schleifleitungen, Schleifringe oder allgemein Drehübertragungssysteme zusammengefasst.

### Stand der Technik

Es werden zur kontaktierenden (galvanischen) Übertragung elektrischer Signale bzw. elektrischer Energie bei vorzugsweise linearer oder leicht kurvenförmiger Bahn sogenannte Schleifleitungen eingesetzt. Bei Drehbewegungen werden diese als Schleifringe bezeichnet. Zur kontaktlosen Übertragung zwischen gegeneinander beweglichen Partnern sind verschiedene Systeme bekannt, wie z. B. die in der Europäischen Patentanmeldung 98 907 894.4 welche eine leiterförmige Struktur, bestehend aus diskreten Blindelementen besitzt. Ein weiteres System ist im Dokument EP 920 092 A offenbart. Weiterhin sind insbesondere im Falle der Übertragung zwischen einander drehenden Partnern sogenannte Drehübertrager für Flüssigkeiten und Gase bekannt. In der Regel sind derartige Übertragungssysteme für die Funktion des Gesamtsystems von großer Bedeutung. Häufig werden sie sogar als kritische Komponenten eingestuft. Würde beispielsweise in einem Computertomographen die Signalisierung zwischen Rotor und Stator ausfallen, so könnte die Strahlerleistung der Röntgenröhre nicht mehr gesteuert werden. Als Folge könnte der Patient einer zu hohen Strahlendosis ausgesetzt werden. Im Falle einer linear beweglichen Krananlage könnte der Ausfall der Not-Stop-Einrichtung katastrophale Folgen haben. Daher ist es in all diesen Anwendungen unbedingt notwendig, die Übertragungsstrecke zu überwachen. Häufig geschieht dies durch eine Überwachung des Datenverkehrs zwischen Sender und Empfänger, wobei in dieser gesamten Datenstrecke häufig eine Vielzahl unterschiedlicher Komponenten integriert sind. Damit wird das Gesamtsystem Übertragungsstrecke überwacht. Dies hat jedoch den Nachteil, dass einzelne ausgefallene oder fehlerhafte Komponenten nicht lokalisiert werden können. Wesentlich schwerer wiegt dieser Nachteil, wenn man die Fehlermodi einzelner Übertragungskomponenten betrachtet. Werden mechanische Schleifkontaktanordnungen, insbesondere Schleifringe, zur Signalübertragung verwendet, so können verschiedene Fehlerbilder auftreten. Ist im einfachsten Fall beispielsweise die Schleifbahn verschmutzt, so kann dies zu sporadischen Ausfällen führen. Häufig können derartige Fehler noch von einer Systemfehlerkorrektur abgefangen werden. Hier kann, sobald die ersten sporadischen Übertragungsfehler auftreten, das System wieder gereinigt und instandgesetzt werden. Sind aber die Kohlebürsten weitestgehend abgenutzt, so treten plötzlich sehr massive Übertragungsfehler auf, da dann die Bürsten bereits auf großen Teilen der Schleifbahn abheben und keinen Kontakt mehr herstellen können. Hier ist eine Vorwarnzeit vom Auftreten der ersten Fehler bis zum Totalausfall relativ kurz. Wesentlich gravierender sind die Auswirkungen bei kontaktlosen Übertragungsstrecken. Fällt beispielsweise durch die Alterung elektronischer Komponenten die Senderausgangsleistung kontinuierlich ab, so ist es möglich, dass sie eines Tages die Signalamplitude die Eingangsempfindlichkeit des Empfängers unterschreitet und keine Datenübertragung mehr möglich ist. Dies kann zu einem abrupten Systemausfall ohne Vorwarnzeit führen. Bei Flüssigkeitsübertragern kann bereits das Austreten von geringen Mengen an Flüssigkeit zu schweren Schäden an benachbarten Elektronikkomponenten oder anderen Teilen führen.

In den hier gemachten Ausführungen wird nicht zwischen feststehend und beweglich unterschieden, da dies nur eine Frage der Definition des Bezugssystems ist.

### Darstellung der Erfindung

Der Erfindung liegt die Aufgabe zugrunde, ein Übertragungssystem zu gestalten, welches in der Lage ist, auf einfachem und kostengünstigen Wege seinen Zustand zu diagnostizieren.

Die Aufgabe wird mit den im Anspruch 1 angegebenen Mitteln gelöst. Vorteilhafte Weiterbildungen sind Gegenstand der Unteransprüche.

Erfindungsgemäß wird den beweglichen Einheiten eine Diagnoseeinheit zugeordnet, welche in der Lage ist, kritische Parameter der Übertragungseinheit zu ermitteln und diese an eine zentrale Auswerteeinheit weiter zu signalisieren. Wesentlich für die Funktionalität des Diagnosesystems ist, daß es unmittelbar am Ort des Übertragungssystems Parameter, welche relevant für die Übertragungsqualität sind, ermittelt. So kann beispielsweise mit einer Gesamtmessung des Rauschens eine gesamte Übertragungsstrecke bestehend aus einer oder mehreren Übertragungseinheiten, Zuleitungen bzw. Verbindungselementen ermittelt werden. Steigt das Rauschen nun über einen Grenzwert an, so kann lediglich diese Grenzwertüberschreitung ermittelt, nicht aber die Herkunft des Rauschens lokalisiert werden. Gerade diese Aufgabe kann aber eine Diagnoseeinheit, welche unmittelbar der Übertragungseinheit zugeordnet ist, lösen. Ähnliches gilt beispielsweise bei Flüssigkeitsübertragungssystemen oder anderen Medienübertragungssystemen, bei denen ein Druckabfall diagnostiziert werden soll.

In einer besonders vorteilhaften Ausgestaltung der Erfindung wird für den Fall, dass ein elektrisches Übertragungssystem vorhanden ist, mindestens einer der Komponenten des elektrischen Übertragungssystems eine Diagnoseeinheit zugeordnet. Dadurch kann am Ort der Übertragungseinrichtung das elektrische Übertragungssystem direkt diagnostiziert werden.

In einer weiteren vorteilhaften Ausgestaltung der Erfindung besteht darin, dass im Falle einer Schleifkontaktanordnung, der Einheit welche die beweglichen Schleifkontakte enthält, eine Diagnoseeinheit zugeordnet ist. Diese Einheit der beweglichen Schleifkontakte, häufig als Träger der Kontaktfedern, Kohlehalter oder auch Bürstenblock bezeichnet, trägt die Kontaktfedern, Kontaktkohlen oder andere Kontaktmaterialien. Meist tritt hier im Gegensatz zu der anderen Kontaktkomponente, der Schleifbahn, der höhere Verschleiß auf. Daher ist hier bevorzugt eine Diagnoseeinheit zuzuordnen.

In einer weiteren vorteilhaften Ausgestaltung der Erfindung wird im Falle einer aktiven Übertragungseinrichtung vorzugsweise dem Empfänger eine Diagnoseeinrichtung zugeordnet. Bei aktiven Systemen, welche elektronische Komponenten zur Signalübertragung einsetzen, ist der Empfänger die kritischste Komponente, da hier die kleinsten Signalpegel mit meist nicht vernachlässigbaren Störungen auftreten. Gerade hier ist eine Diagnoseeinheit, welche wahlweise noch das Signal-Rauschverhältnis auswerten kann besonders wichtig. Eine optionale Diagnoseeinheit kann die Signalpegel im Sender diagnostizieren.

In einer weiteren vorteilhaften Ausgestaltung der Erfindung sind mehrere Diagnoseeinheiten durch ein gemeinsames Bussystem miteinender verbunden. Dadurch ist eine besonders einfache Anlagenarchitektur gerade bei größeren Systemen möglich. Weiterhin ist eine einfache Erweiterung bestehender Systeme durch einfaches Hinzufügen weiterer Übertragungseinheiten mit Diagnoseeinheiten möglich. Bevorzugte Bussysteme, welche besonders geeignet erscheinen sind beispielsweise CAN, Profibus, Interbus oder andere Feldbussysteme.

In einer weiteren vorteilhaften Ausgestaltung der Erfindung sind Übertragungseinheiten zur Übertragung der Signale des Bussystems zwischen den beweglichen Einheiten vorhanden, so dass nur auf einer Seite des Übertragungssystems eine Auswerteeinheit notwendig ist. Diese bedeutet z.B. im Falle eines mechanischen Schleifringes, dass Schleifringwege zur Übertragung der Bussignale zwischen den beweglichen Einheiten vorhanden sind. Ebenso können die Signale aber auch beispielsweise über ein Multiplexsystem zusätzlich zu anderen, ohnehin zu übertragenden Informationen übertragen werden. Besitzt die Übertragungseinheit ein Hochgeschwindigkeitsbussystem, so können über dieses auch im Zeitmultiplexverfahren die Signale des Bussystems zwischen den beweglichen Einheiten übertragen werden.

In einer weiteren vorteilhaften Ausgestaltung der Erfindung enthält mindestens eine Diagnoseeinheit einen Mikroprozessor oder Mikrocontroller. Die Aufgabe des Mikrocontrollers ist es, die Sensorsignale auszuwerten bzw. Meßwerte oder Warnungen an andere Einheiten zu signalisieren.

In einer weiteren vorteilhaften Ausgestaltung der Erfindung befindet sich wahlweise eine Anzeigevorrichtung an der Diagnoseeinheit, welche vorzugsweise auf optischem bzw. akustischem Wege den Zustand der Übertragungseinrichtung anzeigt. So kann im bevorzugten Falle unmittelbar an der Diagnoseeinheit der Status der Übertragungsstrecke festgestellt werden. Damit ist eine zusätzliche Anzeigeeinheit bzw. ein zusätzliches Diagnosesystem notwendig. Die Signalisierung kann hier beispielsweise akustisch, durch einen Warnton bzw. eine Tonfolge oder auch eine Sprachausgabe sowie wahlweise durch eine optische Anzeige wie eine Lampe bzw. Leuchtdiode oder auch eine Textanzeige erfolgen.

In einer weiteren Ausgestaltung enthält mindestens eine Diagnoseeinheit eine Anzeigevorrichtung zur wahlweisen Anzeige insbesondere kritischer Betriebsparameter wie der Betriebsdauer, der noch verbleibenden Betriebsdauer, des Wartungsintervalls oder im Falle einer Übertragung mit Schleifkontakten des Abriebs oder des noch verbleibenden Kontaktmaterials. Damit besteht richtigen Anwender bzw. Servicetechniker ein unmittelbar Zugriff auf die wichtigen Parameter des Übertragungssystems. Wahlweise können zusätzlich noch wichtige Hinweise auf Wartungsintervalle bzw. zu tauschende Komponenten erfolgen.

Eine andere Ausgestaltung der Erfindung sieht im Falle einer kontaktierenden elektrischen Übertragung die Überwachung vorzugsweise kritischer elektrischer Parameter wie Übergangswiderstand, Kontaktrauschen, Störabstand, Signalverlauf, Augenmuster oder auch Signalamplitude vor. Gerade mit der Messung bzw. Überwachung dieser elektrischen Parameter kann die grundlegende Funktionalität der Übertragungsstrecke beurteilt werden. So liefert beispielsweise die Größe des Kontaktrauschens einen summarischen Wert für die Güte der Übertragungsstrecke. Damit der Übertragungsstrecke letztlich aber elektrische Signale übertragen werden sollen, und das Kontaktrauschen einen wesentlichen Einfluß auf die Übertragungsqualität hat, ist dies sicherlich ein aussagekräftiger Parameter.

Eine weitere Ausgestaltung der Erfindung sieht im Falle einer kontaktlosen elektrischen Übertragung die Überwachung vorzugsweise kritischer elektrischer Parameter wie Signalamplitude, Störabstand, Signalverlauf, oder auch Augenmuster vor.

Eine andere Ausgestaltung der Erfindung sieht im Falle einer kontaktierenden elektrischen Übertragung die Überwachung vorzugsweise kritischer mechanischer Parameter wie Zustand der Kontakte oder die Länge der Schleifkohlen vor. Gerade bei den unmittelbar an der Signalübertragung beteiligten Komponenten hat eine Reihe physikalischer Parameter einen wesentlichen Einfluß auf die Güte der Übertragung. Ein besonders gutes Beispiel hierfür ist die Länge der Schleifkohlen bei einem mechanischen Schleifring. Bei großer Kohlenlänge ist die Kohleandruckfeder stark komprimiert, so daß sich auch eine hohe Anpresskraft ergibt, welche in einem relativ niedrigen Kontaktrauschen resultiert. Bei zunehmendem Abrieb sinkt die Anpresskraft, wobei das Kontaktrauschen kontinuierlich geringfügig ansteigt. Ist die Kohle nun weit über ihre Verschleißgrenze hinweg abgeschliffen, so setzt ab einem bestimmten Punkt die Übertragung aus. Das erfindungsgemäße Diagnosesystem hat hier also die Länge der Kohle zu überwachen und rechtzeitig, vor dem aussetzen der Übertragung, einen anstehenden Kohlewechsel zu signalisieren. Die Überwachung der mechanischen Parameter ergänzt die zuvor beschriebene Überwachung der elektrischen Parameter. So kann beispielsweise aufgrund der Messung des Kontaktrauschens festgestellt werden, daß die Übertragungsstrecke nicht mehr den Anforderungen genügt. Durch Messung der physikalischen Parameter wie beispielsweise der Kohlelänge kann aber auch die Ursache eines derartigen Verhaltens festgestellt werden, wenn beispielsweise die Kohle bereits zu weit abgeschliffen ist.

In einer weiteren Ausgestaltung der Erfindung werden wahlweise wichtige mechanische bzw. physikalische Parameter erfasst. Dies können beispielsweise Rundlauf, Planschlag oder auch den Abstand bzw. die Spurführung der beweglichen Einheiten sein. Gerade derartige mechanische bzw. physikalische haben sowohl bei kontaktierenden als auch bei kontaktlosen Datenübertragungseinrichtungen und insbesondere bei Medienübertragungseinrichtungen einen gravierenden Einfluß auf die Funktion. So können beispielsweise Höhenabweichungen in einer Größenordnung von 0,1 mm bei kontaktierenden Schleifringen mit hoher Drehzahl ein derart hohes Kontaktrauschen verursachen, daß diese für eine Signalübertragung kaum mehr einsetzbar sind. Somit wird erfindungsgemäß die Diagnoseeinheit mit Sensoren und entsprechenden Auswerteschaltungen bzw. Algorithmen ausgestattet, welche die Erfassung derartiger Schwankungen ermöglichen. Beispielsweise kann eine Höhen- oder Lageänderung vorteilhaft mit einem induktiven Näherungsensor ermittelt werden.

Eine andere Ausgestaltung sieht eine Diagnoseeinheit vor, welche derart gestaltet ist, dass sie die Kommunikation zwischen externen Signalquellen bzw. -senken, welche mittels der Übertragungseinheit kommunizieren und der zugeordneten Übertragungseinheit überwacht. Somit wird nicht nur die Übertragungseinheit selbst überwacht, sondern es wird zusätzlich noch der Kommunikationsweg von bzw. zu einer externen Signalquelle bzw. Signalsenke sowie wahlweise diese selbst mit in die Überwachung einbezogen. Eine solche Überwachung kann beispielsweise dadurch realisiert werden, daß bereits die Signale, welche beide Übertragungseinheit eingehen, überprüft werden. Eine solche Signalüberprüfung kann beispielsweise die Signalamplitude, Leitungsimpedanz, spektrale Zusammensetzung, Augenmuster bzw. andere elektrische Parameter umfassen. Damit ist noch eine detaillierte Analyse von Ausfällen bzw. potentiellen Fehlerquellen möglich.

In einer weiteren vorteilhaften Ausgestaltung der Erfindung enthält mindestens eine Diagnoseeinheit eine Auswerteeinheit, welche spezielle statistische Auswertungen bzw. Trendanalysen durchführen kann. Häufig sind die gemessenen Werte nicht alleine aussagekräftig. So kann beispielsweise das Kontaktrauschen einer mechanischen Schleifringeinheit sehr stark variieren. In solchen Fall kann mit Hilfe einer statistischen Auswertung ein wesentlich besserer Einblick in das Verhalten der Übertragungsstrecke gewonnen werden. So könnte beispielsweise ein Wert, der eine Auftrittswahrscheinlichkeit von Kontaktwiderstandswerten angibt als Maßstab für die Beurteilung der Güte einer Übertragungsstrecke herangezogen werden. Ein anderes wichtiges Mittel zur Auswertung ist die Trendanalyse. Hiermit kann abgeschätzt werden wie sich in Zukunft die Eigenschaften eines Übertragungssystems entwickeln werden und ob bzw. wann Vorkehrungen getroffen bzw. Wartungsmaßnahmen ergriffen werden müssen.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen hinsichtlich der Offenbarung aller im Text nicht näher erläuterten erfindungsgemäßen Einzelheiten ausdrücklich verwiesen wird.

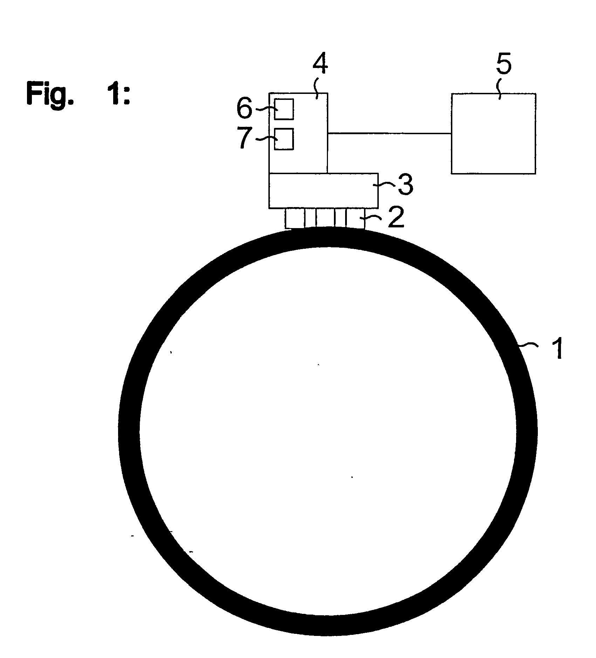

Figur 1 eine beispielhafte Ausführung einer erfindungsgemäßen Anordnung im Falle eines mechanischen Schleifringsystems.

Ein mechanischer Schleifringübertrager besteht aus einem Rotor (1) und einem Kohlenhalter (3) mit zugehörigen Kohlen (2) zum Abgriff der Signale. Dem Kohlehalter bzw. Bürstenblock ist eine Diagnoseeinheit (4) zugeordnet, welche den Zustand der Kohlen ermittelt und an eine zentrale Steuereinheit (5) signalisiert. Weiterhin besitzt die Diagnoseeinheit eine optische Anzeigevorrichtung (6) sowie eine akustische Anzeigevorrichtung des Kohlezustandes.

## Patentansprüche

1. Anordnung zur kontaktierenden Übertragung elektrischer Signale, elektrischer Energie über kurze Strecken zwischen gegeneinander beweglichen Einheiten, bestehend aus mindestens einer entlang der Bahn der Bewegung angeordneten ersten Einheit und mindestens einer gegenüber dieser beweglich angeordneten zweiten Einheit wobei
mindestens einer der Einheiten eine Diagnoseeinheit (4) zugeordnet ist, welche den Zustand mindestens einer der beweglichen Einheiten ermittelt und an eine zentrale Steuereinheit (5) signalisiert,
**dadurch gekennzeichnet, dass**
mindestens eine Diagnoseeinheit eine Vorrichtung zur wahlweisen Überwachung elektrischer Parameter der Übertragungseinheit wie Übergangswiderstand, Kontaktrauschen, Störabstand, Signalverlauf, Augenmuster oder auch Signalamplitude enthält.

2. Anordnung zur kontaktlosen Übertragung elektrischer Signale, elektrischer Energie über kurze Strecken zwischen gegeneinander beweglichen Einheiten, bestehend aus mindestens einer entlang der Bahn der Bewegung angeordneten ersten Einheit und mindestens einer gegenüber dieser beweglich angeordneten zweiten Einheit wobei
mindestens einer der Einheiten eine Diagnoseeinheit (4) zugeordnet ist, welche den Zustand mindestens einer der beweglichen Einheiten ermittelt und an eine zentrale Steuereinheit (5) signalisiert,
**dadurch gekennzeichnet, dass**
mindestens eine Diagnoseeinheit eine Vorrichtung zur wahlweisen Überwachung elektrischer Parameter der übertragungseinheit wie Signalamplitude, Störabstand, Signalverlauf oder Augenmuster überwacht.

3. Anordnung nach Anspruch 1 bzw. 2,
**dadurch gekennzeichnet, dass**
in den beweglichen Einheiten mindestens einer der Komponenten der elektrischen Übertragungseinrichtung, in einer der gegeneinander beweglichen Komponenten einer Diagnoseeinheit zugeordnet ist.

4. Anordnung nach Anspruch 1,
**dadurch gekennzeichnet, dass**
mindestens einer Einheit, welche die beweglichen Kontaktelemente enthält, eine Diagnoseeinheit zugeordnet ist.

5. Anordnung nach Anspruch 1,
**dadurch gekennzeichnet, dass**
mindestens einer Einheit, welche die Schleifkontakte enthält, eine Diagnoseeinheit zugeordnet ist.

6. Anordnung nach einem der Ansprüche 1 bis 5,
**dadurch gekennzeichnet, dass**
im Falle einer aktiven, unter Einbeziehung von elektronischen Mitteln durchgeführten kontaktlosen oder kontaktierenden Übertragung, mindestens eine Diagnoseeinheit dem Empfänger und wahlweise eine weitere Diagnoseeinheit dem Sender zugeordnet ist.

7. Anordnung nach einem der Ansprüche 1 bis 6,
**dadurch gekennzeichnet, dass**
mehrere der Diagnoseeinheiten durch ein gemeinsames Bussystem miteinander verbunden sind.

8. Anordnung nach einem der Ansprüche 1 bis 7,
**dadurch gekennzeichnet, dass**
mindestens eine Übertragungseinheit zur Übertragung der Signale des Bussystems zwischen den beweglichen Einheiten vorhanden sind.

9. Anordnung nach einem der Ansprüche 1 bis 8,
**dadurch gekennzeichnet, dass**
in mindestens einer der Diagnoseeinheiten ein Mikroprozessor oder Mikrocontroller vorgesehen ist.

10. Anordnung nach einem der Ansprüche 1 bis 9,
**dadurch gekennzeichnet, dass**
mindestens eine der Diagnoseeinheiten wahlweise eine Vorrichtung zur optischen oder akustischen Anzeige des Zustandes der Übertragungseinrichtung enthält.

11. Anordnung nach einem der Ansprüche 1 bis 10,
**dadurch gekennzeichnet, dass**
mindestens eine der Diagnoseeinheiten wahlweise eine Vorrichtung zur quantitativen Anzeige von Betriebsparametern, insbesondere von kritischen Parametern der Übertragungseinrichtung enthält.

12. Anordnung nach Anspruch 1,
**dadurch gekennzeichnet, dass**
mindestens eine Diagnoseeinheit eine Vorrichtung zur wahlweisen Überwachung mechanischer Parameter wie den Zustand der Kontakte oder die Länge der Schleifkohlen enthält.

13. Anordnung nach einem der Ansprüche 1 bis 12,
**dadurch gekennzeichnet, dass**
mindestens eine Diagnoseeinheit eine Vorrichtung zur wahlweisen Überwachung mechanische Parameter wie Rundlauf, Planschlag oder auch den Abstand bzw. die Spurführung der beweglichen Einheiten enthält.

14. Anordnung nach einem der Ansprüche 1 bis 13,
**dadurch gekennzeichnet, dass**
mindestens eine Diagnoseeinheit eine Vorrichtung zur wahlweisen Überwachung der Signalübertragung zwischen externen Signalquellen bzw.- senken, welche mittels der Übertragungseinheit kommunizieren und der zugeordneten Übertragungseinheit enthält.

15. Anordnung nach einem der Ansprüche 1 bis 14,
**dadurch gekennzeichnet, dass**
mindestens eine Diagnoseeinheit eine Auswerteeinheit zur statistischen Auswertung bzw. Trendanalyse enthält.

## Claims

1. Arrangement for contacting transmission of electric signals or electric energy along short distances between units that are movable relative to each other, comprising at least one first unit disposed along the track of the movement, and at least one second unit disposed to be movable relative to this first unit, in which
a diagnostic unit (4) is assigned to at least one of the units, for determining the state of at least one of the movable units and signalling this to a central control unit (5), **characterized in that**
at least one diagnostic unit contains a device for optional monitoring of electrical parameters of the transmitting unit, such as transition resistance, contact noise, signal-to-noise ratio, signal characteristic, eye pattern, or also signal amplitude.

2. Arrangement for non-contacting transmission of electric signal or electric energy along short distances between units that are movable relative to each other, comprising at least one first unit disposed along the track of the movement, and at least one second unit disposed to be movable relative to this first unit, in which
a diagnostic unit (4) is assigned to at least one of the units, for determining the state of at least one of the movable units and signalling this to a central control unit (5), **characterized in that**
at least one diagnostic unit monitors a device for optional monitoring of electrical parameters of the transmitting unit, such as signal amplitude, signal-to-noise ratio, signal characteristic, or eye pattern.

3. Arrangement according to claim 1 or 2, respectively,
**characterized in that**
in the movable units, a diagnostic unit is assigned to at least one of the components of the electrical transmission means in one of the components that are movable relative to each other.

4. Arrangement according to claim 1,
**characterized in that**
a diagnostic unit is assigned to at least one unit that contains the movable contact elements.

5. Arrangement according to claim 1,
**characterized in that**
a diagnostic unit is assigned to at least one unit that contains the sliding contacts.

6. Arrangement according to any one of claims 1 to 5,
**characterized in that**
in the case of an active non-contacting or contacting transmission performed with involvement of electronic means, at least one diagnostic unit is assigned to the receiver, and optionally a further diagnostic unit is assigned to the transmitter.

7. Arrangement according to any one of claims 1 to 6,
**characterized in that**
several of the diagnostic units are interconnected by a common bus system.

8. Arrangement according to any one of claims 1 to 7,
**characterized in that**
at least one transmitting unit is present for transmitting the signals of the bus system between the movable units.

9. Arrangement according to any one of claims 1 to 8,
**characterized in that**
a microprocessor or microcontroller is provided in at least one of the diagnostic units.

10. Arrangement according to any one of claims 1 to 9,
**characterized in that**
at least one of the diagnostic units optionally contains a device for optically or acoustically indicating the state of the transmission means.

11. Arrangement according to any one of claims 1 to 10,
**characterized in that**
at least one of the diagnostic units optionally contains a device for quantitatively indicating operating parameters, in particular critical parameters of the transmission means.

12. Arrangement according to claim 1,
**characterized in that**
at least one diagnostic unit contains a device for optionally monitoring mechanical parameters such as the state of the contacts or the length of the sliding carbon brushes.

13. Arrangement according to any one of claims 1 to 12,
**characterized in that**
at least one diagnostic unit contains a device for optionally monitoring mechanical parameters such as concentric running, axial run-out, or also the spacing or the tracking of the movable units.

14. Arrangement according to any one of claims 1 to 13,
**characterized in that**
at least one diagnostic unit contains a device for optionally monitoring signal transmission between external signal sources or sinks which communicate by means of the transmission unit, and the assigned transmission unit.

15. Arrangement according to any one of claims 1 to 14,
**characterized in that**
at least one diagnostic unit contains an evaluation unit for statistical evaluation or trend analysis.

## Revendications

1. Dispositif pour la transmission par contact de signaux électriques, d'énergie électrique sur de courtes distances entre des unités mobiles l'une par rapport à l'autre, composé d'au moins une première unité disposée le long du trajet de déplacement et d'au moins une deuxième unité disposée de façon mobile par rapport à celle-ci, dans lequel
au moins une des unités est associée à une unité de diagnostic (4) qui détermine l'état d'au moins une des unités mobiles et le signale à une unité de commande centrale (5), **caractérisé en ce qu'**au moins une unité de diagnostic contient un dispositif pour la surveillance sélective de paramètres électriques de l'unité de transmission tels que la résistance de contact, le bruit de contact, le rapport signal sur bruit, l'évolution du signal, le diagramme de l'oeil ou l'amplitude du signal.

2. Dispositif pour la transmission par contact de signaux électriques, d'énergie électrique sur de courtes distances entre des unités mobiles l'une par rapport à l'autre, composé d'au moins une première unité disposée le long du trajet de déplacement et d'au moins une deuxième unité disposée de façon mobile par rapport à celle-ci, dans lequel
au moins une des unités est associée à une unité de diagnostic (4) qui détermine l'état d'au moins une des unités mobiles et le signale à une unité de commande centrale (5), **caractérisé en ce qu'**au moins une unité de diagnostic contient un dispositif pour la surveillance sélective de paramètres. électriques de l'unité de transmission tels que l'amplitude du signal, le rapport signal sur bruit, l'évolution du signal ou le diagramme de l'oeil.

3. Dispositif selon la revendication 1 ou 2, **caractérisé en ce que** dans les unités mobiles, au moins un des composants du dispositif de transmission électrique est disposé dans l'un des composants mobiles l'un par rapport à l'autre d'une unité de diagnostic.

4. Dispositif selon la revendication 1, **caractérisé en ce qu'**au moins une unité contenant les éléments de contact mobiles est associée à une unité de diagnostic.

5. Dispositif selon la revendication 1, **caractérisé en ce qu'**au moins une unité contenant les contacts frotteurs est associée à une unité de diagnostic.

6. Dispositif selon l'une des revendications 1 à 5, **caractérisé en ce qu'**en cas de transmission sans contact ou par contact active, réalisée avec l'intervention de moyens électroniques, au moins une unité de diagnostic est associée au récepteur et une autre unité de diagnostic au choix au récepteur.

7. Dispositif selon l'une des revendications 1 à 6, **caractérisé en ce que** plusieurs des unités de diagnostic sont reliées entre elles par un système de bus commun.

8. Dispositif selon l'une des revendications 1 à 7, **caractérisé en ce qu'**au moins une unité de transmission est prévue pour la transmission des signaux du système de bus entre les unités mobiles.

9. Dispositif selon l'une des revendications 1 à 8, **caractérisé en ce qu'**un microprocesseur ou un microcontrôleur est prévu dans au moins une des unités de diagnostic.

10. Dispositif selon l'une des revendications 1 à 9, **caractérisé en ce qu'**au moins une des unités de diagnostic contient au choix un dispositif d'indication visuelle ou sonore de l'état du dispositif de transmission.

11. Dispositif selon l'une des revendications 1 à 10, **caractérisé en ce qu'**au moins une des unités de diagnostic contient au choix un dispositif pour l'indication quantitative de paramètres de fonctionnement, en particulier de paramètres critiques du dispositif de transmission.

12. Dispositif selon la revendication 1, **caractérisé en ce qu'**au moins une unité de diagnostic contient un dispositif pour la surveillance sélective de paramètres mécaniques tels que l'état des contacts ou la longueur des frotteurs en carbone.

13. Dispositif selon l'une des revendications 1 à 12, **caractérisé en ce qu'**au moins une unité de diagnostic contient un dispositif pour la surveillance sélective de paramètres sélectifs tels que la circularité de mouvement, le débattement axial ou la distance ou l'alignement des unités mobiles.

14. Dispositif selon l'une des revendications 1 à 13, **caractérisé en ce qu'**au moins une unité de diagnostic contient un dispositif pour la surveillance sélective de la transmission du signal entre des sources et puits de signal externes qui communiquent au moyen de l'unité de transmission et contient l'unité de transmission correspondante.

15. Dispositif selon l'une des revendications 1 à 14, **caractérisé en ce qu'**au moins une unité de diagnostic contient une unité d'interprétation pour l'interprétation statistique ou l'analyse des tendances.
